# EUROPEAN PATENT APPLICATION

(11) **EP 3 806 479 A1**
(43) Date of publication of application: **14.04.2021**
(21) Application number: 19812047.9
(22) Date of filing: 15.05.2019
(51) Int. Cl.: H04N 21/43, H04L 29/06, H04N 21/2187, H04N 21/433, H04N 21/435, H04N 21/8547

(54) **NETWORK LIVE-BROADCASTING METHOD AND DEVICE, TERMINAL AND SERVER**

(30) Priority: 28.05.2018 CN 201810524204
(71) Applicant: ALIBABA GROUP HOLDING LIMITED, George Town, Grand Cayman (KY)
(72) Inventor: CHEN, Jufeng, Hangzhou, Zhejiang 311121 (CN); GUAN, Yuhong, Hangzhou, Zhejiang 311121 (CN); LIU, Changding, Hangzhou, Zhejiang 311121 (CN); CHANG, Gaowei, Hangzhou, Zhejiang 311121 (CN); SHI, Jie, Hangzhou, Zhejiang 311121 (CN); WAN, Wentao, Hangzhou, Zhejiang 311121 (CN); MIAO, Shuncai, Hangzhou, Zhejiang 311121 (CN); BI, Chen, Hangzhou, Zhejiang 311121 (CN); LIU, Peifeng, Hangzhou, Zhejiang 311121 (CN); XIE, Yi, Hangzhou, Zhejiang 311121 (CN); ZHANG, Youli, Hangzhou, Zhejiang 311121 (CN); QIN, Dong, Hangzhou, Zhejiang 311121 (CN); YANG, Chuan, Hangzhou, Zhejiang 311121 (CN); LAI, Qingfeng, Hangzhou, Zhejiang 311121 (CN)
(74) Representative: Finnegan Europe LLP
(86) International application number: PCT/CN2019/086961
(87) International publication number: WO 2019/228187

(57) **Abstract**

Embodiments of the present application provide a network live-broadcasting method and device, a terminal, and a server. A client side obtains live-broadcasting data from a server side and plays the live-broadcasting data, and obtains service data from the server side and caches the service data; a live-broadcasting side inserts key information when predetermined content corresponding the service data is included in the live-broadcasting data; and the client side detects the key information in the live-broadcasting data and outputs, in response to the key information, the service data on a playing interface of the live-broadcasting data. According to the embodiments of the present application, the output timing of the service data is controlled by the key information in the live-broadcasting data, such that the predetermined content of the live-broadcasting data and the service data can be output synchronously, and the synchronous rate between the live-broadcasting data and the service data is improved.

## Description

The present application claims priority to Chinese Patent Application No. 201810524204.3 filed on May 28, 2018 and entitled "NETWORK LIVE-BROADCASTING METHOD AND DEVICE, TERMINAL, AND SERVER," the content of which is incorporated herein by reference in its entirety.

### Technical Field

Embodiments of the present invention relate to the technical field of computer applications, and in particular, to a network live-broadcasting method and device, a terminal, and a server.

### Technical Background

Along with the development of the Internet technology and stream medium technology, network live-broadcasting has been rapidly developed. Data in network live-broadcasting mainly includes live-broadcasting data and service data. Here, the live-broadcasting data is obtained through real-time collection from a live-broadcasting site by a live-broadcasting side, which may comprise images, texts, voice, etc., and then is processed, such as encoded, uploaded to a server side, distributed by the server side to a client side, and processed, such as decoded, and played by the client side, so that a viewing user can view the live-broadcasting data through the client side; and the service data mainly refers to data related to the live-broadcasting data and provided by the server side, such as a number of online viewers, comment data, and the like, and the service data obtained from the server side can be displayed by the client side on a playing interface of the live-broadcasting data.

The live-broadcasting data needs to be processed, such as encoded, by a live-broadcasting side and then uploaded to the server side and distributed by the server side to the client side, while the service data is obtained by the client side directly from the server side, and therefore, the network latency of the live-broadcasting data is greater than that of the service data. In practical applications, there are cases where predetermined content in the service data and the live-broadcasting data is output simultaneously; however, due to the greater network latency of the live-broadcasting data, the predetermined content in the live-broadcasting data may not be played when the service data has been output, leading to the problem that the predetermined content in the live-broadcasting data cannot be output synchronously with the service data.

### Summary of the Invention

The embodiments of the present application provide a network live-broadcasting method and device, a terminal, and a server, so as to solve the technical problem in the prior art that service data and predetermined content in live-broadcasting data cannot be output synchronously.

In a first aspect, a network live-broadcasting method is provided in the embodiments of the present application, the method comprising:
obtaining live-broadcasting data from a server side and playing the live-broadcasting data;
obtaining service data from the server side and caching the service data;
detecting whether key information is inserted in the live-broadcasting data, wherein the key information is inserted by a live-broadcasting side in the live-broadcasting data when predetermined content corresponding to the service data is included in the live-broadcasting data; and
outputting, in response to the key information, the service data on a playing interface of the live-broadcasting data, so that the service data is output synchronously with the predetermined content.

In a second aspect, a network live-broadcasting method is provided in the embodiments of the present application, the method comprising:
collecting live-broadcasting data;
inserting, if predetermined content corresponding to service data is included in the live-broadcasting data, key information corresponding to the service data in the live-broadcasting data; and
transmitting the live-broadcasting data to a server side, wherein the live-broadcasting data is transmitted to a client side for the client side to play the live-broadcasting data, and when the key information is detected and obtained from the live-broadcasting data, outputting the service data obtained from the server side on a playing interface of the live-broadcasting data.

In a third aspect, a network live-broadcasting method is provided in the embodiments of the present application, the method comprising:
receiving live-broadcasting data uploaded by a live-broadcasting side, wherein key information is inserted when the live-broadcasting data comprises predetermined content corresponding to service data;
transmitting the live-broadcasting data to a client side for the client side to play the live-broadcasting data; and
providing the service data to the client side for the client side to output the service data on a playing interface of the live-broadcasting data when the key information is detected and obtained from the live-broadcasting data.

In a fourth aspect, a network live-broadcasting method is provided in the embodiments of the present application, the method comprising:
obtaining live-broadcasting data from a server side and playing the live-broadcasting data;
detecting whether key information is inserted in the live-broadcasting data, the key information being inserted by a live-broadcasting side in the live-broadcasting data when the live-broadcasting data comprises predetermined content corresponding to service data;
obtaining, in response to the key information, the service data comprised in the key information; and
outputting the service data on a playing interface of the live-broadcasting data, so that the service data is output synchronously with the predetermined content.

In a fifth aspect, a network live-broadcasting device is provided in the embodiments of the present application, the device comprising:
a first playing module configured to obtain live-broadcasting data from a server side and play the live-broadcasting data;
a first data obtaining module configured to obtain service data from the server side and cache the service data;
a first detecting module configured to detect whether key information is inserted in the live-broadcasting data, wherein the key information is inserted by a live-broadcasting side into the service data when predetermined content corresponding to the service data is included in the live-broadcasting data; and
a first outputting module configured to output, in response to the key information, the service data on a playing interface of the live-broadcasting data.

In a sixth aspect, a network live-broadcasting device is provided in the embodiments of the present application, the device comprising:
a data collecting module configured to collect live-broadcasting data;
an information inserting module configured to insert, if predetermined content corresponding to service data is included in the live-broadcasting data, key information corresponding to the service data in the live-broadcasting data; and
a first data transmitting module configured to transmit the live-broadcasting data to a server side, wherein the live-broadcasting data is transmitted to a client side for the client side to play the live-broadcasting data, and when the key information is detected and obtained from the live-broadcasting data, output the service data obtained from the server side on a playing interface of the live-broadcasting data.

In a seventh aspect, a network live-broadcasting device is provided in the embodiments of the present application, the device comprising:
a data receiving module configured to receive live-broadcasting data uploaded by a live-broadcasting side, wherein key information is inserted when the live-broadcasting data comprises predetermined content corresponding to service data;
a second data transmitting module configured to transmit the live-broadcasting data to a client side for the client side to play the live-broadcasting data; and
a data providing module configured to provide the service data to the client side for the client side to output the service data on a playing interface of the live-broadcasting data when the key information is detected and obtained from the live-broadcasting data.

In an eighth aspect, a network live-broadcasting device is provided in the embodiments of the present application, the device comprising:
a second playing module configured to obtain live-broadcasting data from a server side and play the live-broadcasting data;
a second detecting module configured to detect whether key information is inserted in the live-broadcasting data, the key information being inserted by a live-broadcasting side in the live-broadcasting data when the live-broadcasting data comprises predetermined content corresponding to service data;
a second data obtaining module configured to obtain, in response to the key information, the service data comprised in the key information; and
a second outputting module configured to output the service data on a playing interface of the live-broadcasting data, so that the service data is output synchronously with the predetermined content.

In a ninth aspect, a terminal is provided in the embodiments of the present application, the terminal comprising a storage assembly, a processing assembly, and a display assembly;
the storage assembly storing one or more computer program instructions; the one or more computer program instructions being called and executed by the processing assembly; and
the processing assembly being configured to:
obtain live-broadcasting data from a server side and play the live-broadcasting data;
obtain service data from the server side and cache the service data;
detect whether key information is inserted in the live-broadcasting data, wherein the key information is inserted by a live-broadcasting side into the service data when predetermined content corresponding to the service data is included in the live-broadcasting data; and
in response to the key information, output the service data through a playing interface of the live-broadcasting data provided by the display assembly, so that the service data is output synchronously with the predetermined content.

In a tenth aspect, a terminal is provided in the embodiments of the present application, the terminal comprising a storage assembly, a processing assembly, and a display assembly;
the storage assembly storing one or more computer program instructions; the one or more computer program instructions being called and executed by the processing assembly; and
the processing assembly being configured to:
collect live-broadcasting data;
insert, if predetermined content corresponding to service data is included in the live-broadcasting data, key information corresponding to the service data in the live-broadcasting data; and
transmit the live-broadcasting data to a server side, wherein the live-broadcasting data is transmitted to a client side for the client side to play the live-broadcasting data, and when the key information is detected and obtained from the live-broadcasting data, output the service data obtained from the server side on a playing interface of the live-broadcasting data.

In an eleventh aspect, a server is provided in the embodiments of the present application, the server comprising a storage assembly, a processing assembly, and a display assembly;
the storage assembly storing one or more computer program instructions; the one or more computer program instructions being called and executed by the processing assembly; and
the processing assembly being configured to:
receive live-broadcasting data uploaded by a live-broadcasting side, wherein key information is inserted when the live-broadcasting data comprises predetermined content corresponding to service data;
transmit the live-broadcasting data to a client side for the client side to play the live-broadcasting data; and
provide the service data to the client side for the client side to output the service data on a playing interface of the live-broadcasting data when the key information is detected and obtained from the live-broadcasting data.

In a twelfth aspect, a terminal is provided in the embodiments of the present application, the terminal comprising a storage assembly, a processing assembly, and a display assembly;
the storage assembly storing one or more computer program instructions; the one or more computer program instructions being called and executed by the processing assembly; and
the processing assembly being configured to:
obtain live-broadcasting data from a server side and play the live-broadcasting data;
   detect whether key information is inserted in the live-broadcasting data, the key information being inserted by a live-broadcasting side in the live-broadcasting data when the live-broadcasting data comprises predetermined content corresponding to service data;
   obtain, in response to the key information, the service data comprised in the key information; and
   output the service data through a playing interface of the live-broadcasting data provided by the display assembly, so that the service data is output synchronously with the predetermined content.

In the embodiment of the present application, a client side obtains service data from a server side and caches the service data locally; a live-broadcasting side inserts key information when predetermined content is included in the live-broadcasting data, and thus the client side detects the key information in the live-broadcasting data and outputs, if the key information is detected and obtained, the service data, wherein the service data is related to the predetermined content, the output timing of the service data is controlled by the key information, such that the predetermined content of the live-broadcasting data and the service data can be output synchronously, thereby improving the synchronous rate between the live-broadcasting data and the service data.

These aspects or other aspects of the present application will become clearer and easier to understand in the description of embodiments below.

### Brief Description of the Drawings

To more clearly describe the technical solutions in the embodiments of the present application or the prior art, the accompanying drawings required for describing the embodiments or the prior art are briefly introduced below. It is apparent that the accompanying drawings described in the following are merely some embodiments of the present application, and those of ordinary skill in the art may still derive other drawings from these accompanying drawings without creative effort.
FIG. 1 is a flowchart of an embodiment of a live-broadcasting method according to the present application;
FIG. 2 is a flowchart of another embodiment of a live-broadcasting method according to the present application;
FIG. 3 is a flowchart of another embodiment of a live-broadcasting method according to the present application;
FIG. 4 is a schematic structural diagram of an embodiment of a live-broadcasting system according to the present application;
FIG. 5 is a sequence diagram of data output from a client side in an embodiment of the present application;
FIG. 6 is a flowchart of another embodiment of a live-broadcasting method according to the present application;
FIG. 7 is a flowchart of another embodiment of a live-broadcasting method according to the present application;
FIG. 8 is a schematic structural diagram of an embodiment of a live-broadcasting device according to the present application;
FIG. 9 is a schematic structural diagram of an embodiment of a terminal according to the present application;
FIG. 10 is a schematic structural diagram of another embodiment of a live-broadcasting device according to the present application;
FIG. 11 is a schematic structural diagram of another embodiment of a terminal according to the present application;
FIG. 12 is a schematic structural diagram of another embodiment of a live-broadcasting device according to the present application;
FIG. 13 is a schematic structural diagram of an embodiment of a server according to the present application;
FIG. 14 is a schematic structural diagram of another embodiment of a live-broadcasting device according to the present application; and
FIG. 15 is a schematic structural diagram of another embodiment of a terminal according to the present application.

### Detailed Description

In order to enable those skilled in the art to better understand the technical solutions in the present application, the technical solutions in the embodiments of the present application will be described clearly and completely with reference to the accompanying drawings in the embodiments of the present application.

A plurality of operations occurring in a particular order are included in the specification and claims of the present application and in some flows described in the above accompanying drawings; however, it should be clearly understood that these operations may be executed in an order different from the order herein or may be executed in parallel. Numbers of the operations, such as 101, 102, and the like, are merely used to distinguish various operations, and the numbers themselves do not represent any order of execution. In addition, these flows may include more or fewer operations, and these operations may be executed in an order or in parallel. It should be noted that the terms "first," "second," and the like herein are used to distinguish different messages, devices, modules, etc., and do not represent a sequence or define that "first" and "second" are different types.

The technical solutions in the embodiments of the present application are mainly used in network live-broadcasting scenarios, in particular video live-broadcasting scenarios. Network live-broadcasting refers to a manner in which live-broadcasting data may be viewed on different communication platforms at the same time through a network system, and online interaction may also be realized.

Data in network live-broadcasting mainly includes live-broadcasting data and service data. The live-broadcasting data is collected and uploaded to a server side by a live-broadcasting side. The live-broadcasting side often uses an OBS (Open Broadcaster Software) pushing device to process the live-broadcasting data collected by a collection device, and then push the same to a server side. The live-broadcasting data may be audio data or video data, and may integrate plentiful elements such as images, texts, voice, etc. In practical applications, the live-broadcasting data is typically obtained by following the occurrence and development of events at a live-broadcasting site and collecting field images and audio, as well as live commentary. Therefore, a viewing user can intuitively feel an event at the site according to live-broadcast content in the live-broadcasting data.

The service data is data related to the live-broadcasting data and provided by the server side, such as a number of online viewers, comment data, and the like. In a practical application, in order to realize better online interaction, a host at a live-broadcasting site may broadcast question information, or the question information may be displayed in text or other manners at the live-broadcasting site, and viewing users may be asked to answer the questions in an interactive manner. In order to realize interactive question answering by the viewing users, the service data may refer to displayable data comprising the question information, such as text data or image data, such that when the host at the live-broadcasting site broadcasts the question information and asks viewing users to answer the questions, the client side may output answer widgets to present the service data comprising the question information, thereby enabling the viewing users both to listen to or see the live-broadcasting data to obtain the question information and to execute an answer operation through the answer widgets output by the client side and comprising the question information. In this practical application, it can be seen that the service data and particular live-broadcasting content in the live-broadcasting data need to be presented to the viewing users at the same moment, i.e., synchronously output at the client side. In practical applications, however, a situation may occur, due to reasons like network latency, that a host has broadcast a question but the question information is not output or that question information has been output but the host has not broadcast the question.

In order to solve the technical problem that predetermined content in the live-broadcasting data cannot be output synchronously with the service data, the inventors propose the technical solution of the present application through a series of studies. In the embodiments of the present application, a client side obtains service data from a server side and caches the service data locally; a live-broadcasting side inserts key information when predetermined content is included in the live-broadcasting data, and thus the client side detects the key information in the live-broadcasting data and outputs, if the key information is detected and obtained, the service data on a playing interface of the live-broadcasting data, wherein the service data is related to the predetermined content, the output timing of the service data is controlled by the key information, such that the predetermined content of the live-broadcasting data and the service data can be output synchronously, thereby improving the synchronous rate between the live-broadcasting data and the service data.

The technical solutions in the embodiments of the present application will be described below clearly and completely with reference to the accompanying drawings in the embodiments of the present application. It is apparent that the accompanying drawings described in the following are merely some, not all, embodiments of the present application. All other embodiments obtained by those of ordinary skill in the art based on the embodiments of the present application without creative effort shall fall within the protection scope of the present application.

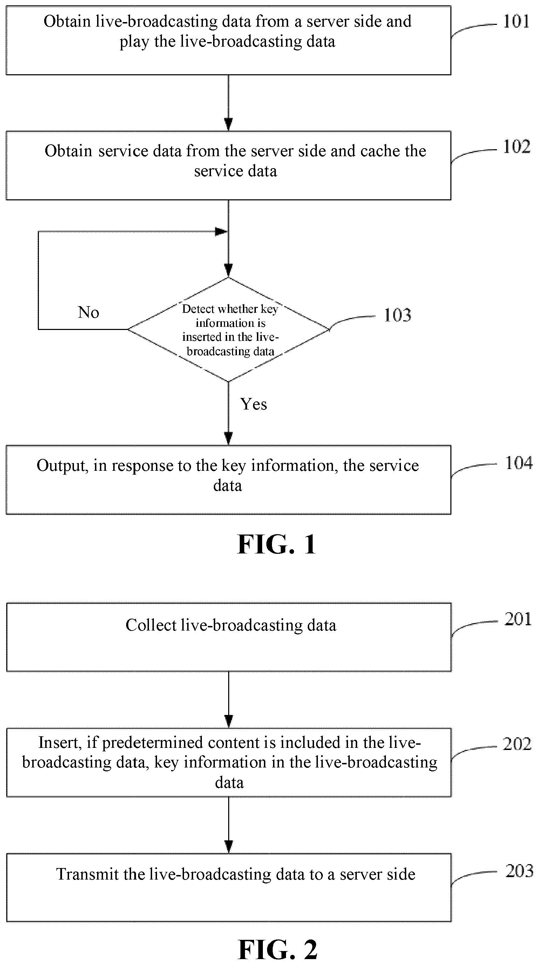

FIG. 1 is a flowchart of an embodiment of a live-broadcasting method according to the present application. The technical solution in the present embodiment is implemented by a client side. The method may comprise the following steps:
101: obtain live-broadcasting data from a server side and play the live-broadcasting data.
102: obtain service data from the server side and cache the service data.

The service data obtained by the client side from the server side may be cached locally first.

103: detect whether key information is inserted in the live-broadcasting data.

Here, the key information is inserted by a live-broadcasting side when predetermined content corresponding to the service data is included in the live-broadcasting data; and
the predetermined content may be, for example, particular content broadcast by a host at a live-broadcasting site or particular content presented at the live-broadcasting site.

The live-broadcasting side may determine that the predetermined content is included in the live-broadcasting data upon receiving a push request. The push request may be triggered when a controller observes that a host at a live-broadcasting site broadcasts particular content or particular content is presented at the live-broadcasting site.

104: output, in response to the key information, the service data on a playing interface of the live-broadcasting data, so that the service data is output synchronously with the predetermined content.

That is, if the key information is detected and obtained, the service data may be output on the playing interface of the live-broadcasting data, such that a viewing user can simultaneously see the predetermined content of the live-broadcasting data and the service data on the playing interface.

Here, the service data is related to the predetermined content. If the key information is detected and obtained, it indicates that the live-broadcasting data played by the client side comprises the predetermined content, and therefore, the service data may be output, so that the predetermined content and the service data may be output synchronously, thereby improving the synchronous rate between the live-broadcasting data and the service data.

Optionally, the key information may comprise a trigger instruction, such that the client side responds to the trigger instruction, that is, may output the service data. Therefore, the control of the timing to display the service data is realized through the key information.

Naturally, the key information may further comprise other content, which will be described in detail in the following embodiments.

FIG. 2 is a flowchart of another embodiment of a live-broadcasting method according to the present application. The technical solution in the present embodiment is implemented by a live-broadcasting side. The method may comprise the following steps:
201: collect live-broadcasting data.
202: insert, if predetermined content corresponding to service data is included in the live-broadcasting data, key information corresponding to the service data in the live-broadcasting data.

Optionally, if a push request is received, it is determined that the predetermined content corresponding to the service data is included in the live-broadcasting data, and thus the key information is inserted in the live-broadcasting data.

The push request may be triggered by a controller at the live-broadcasting site. The controller observes the development of events at the live-broadcasting site, and may trigger the push request if the predetermined content appears, so that the live-broadcasting side inserts the key information in the live-broadcasting data being currently collected.

203: transmit the live-broadcasting data to a server side.

Here, the live-broadcasting data is transmitted to a client side for the client side to play the live-broadcasting data, and when the key information is detected and obtained from the live-broadcasting data, the service data obtained from the server side is output on a playing interface of the live-broadcasting data.

Here, the live-broadcasting side collects the live-broadcasting data in real time, and if the live-broadcasting data being currently collected comprises the predetermined content, the key information corresponding to the service data may be inserted in the live-broadcasting data being currently collected and then transmitted to the service side, otherwise, the live-broadcasting data being currently collected may be directly transmitted to the service side to ensure that the client side can normally play the live-broadcasting data, and output the service data synchronously when it is detected that the key information is present in the live-broadcasting data.

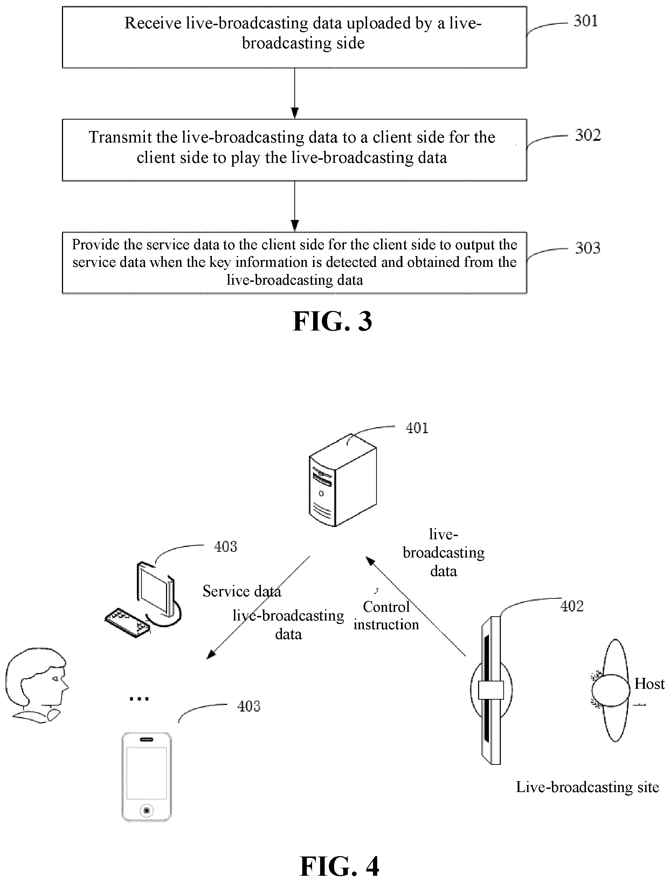

FIG. 3 is a flowchart of another embodiment of a live-broadcasting method according to the present application. The technical solution in the present embodiment is implemented by a server side. The method may comprise the following steps:
301: receive live-broadcasting data uploaded by a live-broadcasting side.
   Here, a live-broadcasting side inserts key information when the live-broadcasting data comprises predetermined content corresponding to service data.
302: transmit the live-broadcasting data to a client side for the client side to play the live-broadcasting data.
303: provide the service data to the client side for the client side to output the service data on a playing interface of the live-broadcasting data when the key information is detected and obtained from the live-broadcasting data.

The embodiments shown in FIG. 1 to FIG. 3 describe the technical solutions of the embodiments of the present application from perspectives of different execution entities, respectively. The technical solutions of the embodiments of the present application may be applied to a network live-broadcasting system as shown in FIG. 4. The network live-broadcasting system consists of a server side 401, a live-broadcasting side 402, and a client side 403, wherein there is at least one client side 403, the client side may be configured in an electronic device, such as a mobile phone, a tablet computer, a computer, a smart watch, and the like, the server side 401 may be implemented by using a CDN (Content Delivery Network) system, and the live-broadcasting side 402 may consist of electronic devices having a collection function and an OBS pushing function, such as a smart device like a mobile phone with a camera, a tablet, and the like. The system architecture of the network live-broadcasting system may be the same as those in the prior art and will not be elaborated herein.

Here, the live-broadcasting side 402 is responsible for collecting, in real time, voice and/or images of the live-broadcasting site, so as to obtain the live-broadcasting data and upload the live-broadcasting data to the server side 401, the server side 401 is responsible for transmitting the live-broadcasting data to the client side 403, and the client side 403 may provide a playing interface to play the live-broadcasting data. It should be understood that the live-broadcasting data may be uploaded to the server side only after processing like encoding, transcoding, and compressing, and accordingly, the client side may play the live-broadcasting data only after processing like decoding, decompressing, etc., which is the same as the prior art and will not be elaborated.

In practical applications, live-broadcasting data collected by a live-broadcasting side at the current moment T0 may be displayed on a client side at probably a moment Tl, and according to the current network environment state, the time interval between T1 and T0 may be between 5 seconds and 15 seconds; however, the client side requests to obtain service data from a server side, and the service data may be returned within 1 second. If the service data is directly output, the service data and the predetermined content in the live-broadcasting data cannot be output synchronously due to network latency.

Therefore, in the embodiments of the present application, the live-broadcasting side 402 collects the live-broadcasting data, and inserts the key information in the live-broadcasting data when the live-broadcasting data comprises predetermined content corresponding to the service data.

The server side 401 may provide the client side 403 with the service data related to the predetermined content.

After obtaining the service data, the client side 403 caches the service data locally first, detects the live-broadcasting data, and if the key information is detected and obtained, outputs the service data on a playing interface of the live-broadcasting data, so as to guarantee that the service data can be output synchronously with the predetermined content of the live-broadcasting data, thereby improving the synchronous rate between the service data and the live-broadcasting data.

In a scenario of live-broadcasting question answering, the service data may be question information, and the predetermined content may, for example, be a particular voice broadcast by a host at the live-broadcasting site for the question information, for example, "begin to answer the question," so that when a viewing user is viewing the live-broadcasting data and the host broadcasts "begin to answer the question," the client side may promptly output the question information in an answer widget for the viewing user to promptly execute an answer operation for the question information.

In some embodiments, in order to reduce the processing pressure on the server side, the client side may request to obtain the service data by periodically accessing the server side.

In addition, during network live-broadcasting, there may be cases where different live-broadcasting contents have respectively corresponding service data that need to be synchronously output with respective live-broadcasting contents. For example, in a scenario of live-broadcasting question answering, there may be a plurality of pieces of question information, and each time when a host at the live-broadcasting site broadcasts one question, a viewing user would be asked to execute one answer operation.

In order to enable the client side to obtain service data corresponding to predetermined content, different pieces of service data in the server side may be in an invalid state in some embodiments.

If the live-broadcasting data comprises predetermined content corresponding to the service data, a live-broadcasting side may send a control instruction to a server side at the same time when inserting key information in the live-broadcasting data. The control instruction may carry a data identifier of the service data, such that the server side may determine the service data corresponding to the predetermined content upon receiving the control instruction, and set the service data to be in a valid state, while the client side can only obtain the service data in the valid state.

If receiving an obtaining request sent from the client side, the server side only transmits the service data in the valid state to the client side. Since the client side can periodically access the server side, the client side can obtain the service data in the valid state and cache the same locally if said data is present on the server side, and the predetermined content and the service data corresponding to the predetermined content can be synchronously output through the control instruction.

Furthermore, due to the presence of network latency and assuming that the network latency of the live-broadcasting data is 5 seconds and the network latency of the service data is 1 second, then the service data needs to wait for about 4 seconds locally before the live-broadcasting data carrying the key information arrives. Therefore, the service data may be stolen in the transmission process or in the local cache, and it is necessary to ensure data security. In particular, in a scenario of live-broadcasting question answering, there is a time limit for outputting the service data, that is, there is a time limit for a user to answer questions. If the question information is stolen and some users learn about the question information in advance, the question answering time is increased, leading to weakened impartiality.

Therefore, in some embodiments, the server side may use a first encryption algorithm to encrypt the service data; and
as an optional manner, the server side may send a first key of the first encryption algorithm to the live-broadcasting side, the first key being used to decrypt the service data.

Accordingly, the live-broadcasting side may insert the key information comprising the first key when the live-broadcasting data comprises predetermined content corresponding to the service data.

Therefore, the client side obtaining the service data from the server side may comprise:
obtaining the service data encrypted using the first encryption algorithm from the server side; and
the client side outputting, in response to the key information, the service data on a playing interface of the live-broadcasting data may comprise:
   decrypting, in response to the key information, the service data using the first key comprised in the key information; and
   outputting the decrypted service data on a playing interface of the live-broadcasting data.

As another optional manner, if the client side detects and obtains the key information, the client side may obtain the first key from the server side in response to the key information, and then use the first key to decrypt the service data.

By performing encrypted transmission on the service data, the data security may be improved and the risk of being stolen is reduced. Moreover, the key and the service data are transmitted separately, which avoids potential security risk as a result of simultaneous interception. The service data arrives at the client side early, but cannot be decrypted when the key cannot be learned, which can ensure that the live-broadcasting data and the service data are synchronous, and also ensure that the key arrives on demand and won't arrive early for early decryption.

Here, the first encryption algorithm may be a symmetric encryption algorithm, and the first key is a private key. The symmetric encryption algorithm may be selected, for example, from AES (Advanced Encryption Standard), DES (Data Encryption Standard), 3DES (Triple DES), RC5 (a block cipher algorithm), IDEA (International Data Encryption Algorithm), and the like, which is not specifically defined in the present application.

Since different client sides correspond to different hardware devices and network environments, the network latency of the live-broadcasting data may be different for different client sides, such that the time of the key information arriving at different client sides may also be different, leading to inconsistent output times of the service data at different client sides, such that different viewing users corresponding to different client sides view the service data at different times, making it impossible to ensure sufficient impartiality in a live-broadcasting scenario with relatively high requirements for impartiality.

Therefore, in some embodiments, the server side may set a predetermined latency parameter of the service data, and the predetermined latency parameter may comprise two time intervals, a first time interval and a second time interval, wherein the first time interval is smaller than the second time interval.

The server side may send the predetermined latency parameter to the client side, and the predetermined latency parameter may be sent, together with the service data, to the client side.

The client side may determine, by combining the obtaining time of the service data and the predetermined latency parameter, the earliest display time and the latest display time of the service data, and specifically, may determine the earliest display time based on the first time interval and the latest display time based on the second time interval.

Therefore, the client side outputting, in response to the key information, the service data on a playing interface of the live-broadcasting data may comprise:
if the receiving time of the key information is earlier than the earliest display time of the service data, waiting until the earliest display time to output the service data on the playing interface of the live-broadcasting data; and
if the receiving time of the key information is later than the earliest display time of the service data and earlier than the latest display time of the service data, outputting the service data on the playing interface of the live-broadcasting data.

Here, if the service data is encrypted using the first encryption algorithm.
then as an optional manner, if the receiving time of the key information is earlier than the earliest display time of the service data, waiting until the earliest display time to use the first key comprised in the key information to decrypt the service data; and
if the receiving time of the key information is later than the earliest display time of the service data and earlier than the latest display time of the service data, directly using the first key comprised in the key information to decrypt the service data; and
as another optional manner, it is also feasible to use the first key in the key information to decrypt the service data first, and if the receiving time of the key information is earlier than the earliest display time of the service data, wait until the earliest display time to output the decrypted service data.

If the receiving time of the key information is later than the earliest display time of the service data and earlier than the latest display time of the service data, decrypting to obtain the service data, and then directly outputting the decrypted service data.

In addition, the method may further comprise:
if the client side determines that the receiving time of the key information is later than the latest display time of the service data, discarding the service data; and
if the client side determines that the receiving time of the key information is earlier than the obtaining time of the service data, discarding the key information.

With the restrictions by the earliest display time and the latest display time, it can be ensured, to a certain degree, that the service data is synchronously displayed with the live-broadcasting data in different client sides.

Here, as an optional manner, if the client side does not detect and obtain the key information when the latest display time of the service data is reached, the client side may request to obtain the service data that is not encrypted from the server side and output the service data on the playing interface of the live-broadcasting data.

In addition, to further ensure security, as another optional manner, the server side may also use a second key and a second encryption algorithm to encrypt the service data, and transmit the second key to the client side; and
optionally, the second key may be transmitted to the client side upon receiving a live-broadcasting request from the client side, or the second key may be transmitted to the client side upon receiving an obtaining request from the client side.

Therefore, after the client side obtains the service data encrypted using the first encryption algorithm, the client side may obtain the service data encrypted using the second encryption algorithm from the server side after a first predetermined time; and
if the client side does not detect and obtain the key information when the latest display time of the service data is reached, the client side may use the second key to decrypt the service data encrypted using the second encryption algorithm, and output the decrypted service data on the playing interface of the live-broadcasting data.

Here, the first predetermined time may be determined according to the network latency time of the live-broadcasting data, and may be shorter than or equal to the network latency time of the live-broadcasting data.

In addition, if the client side periodically accesses the server side, after the client side obtains the service data encrypted using the first encryption algorithm, the client side obtains the service data encrypted using the second encryption algorithm from the server side after a predetermined number of accesses; and
the first predetermined time may be equal to an interval time corresponding to the predetermined number of accesses, and for example, the client side initiates an access at an interval of 2 seconds, the first predetermined time may be the interval time of 2 accesses, i.e., 4 seconds.

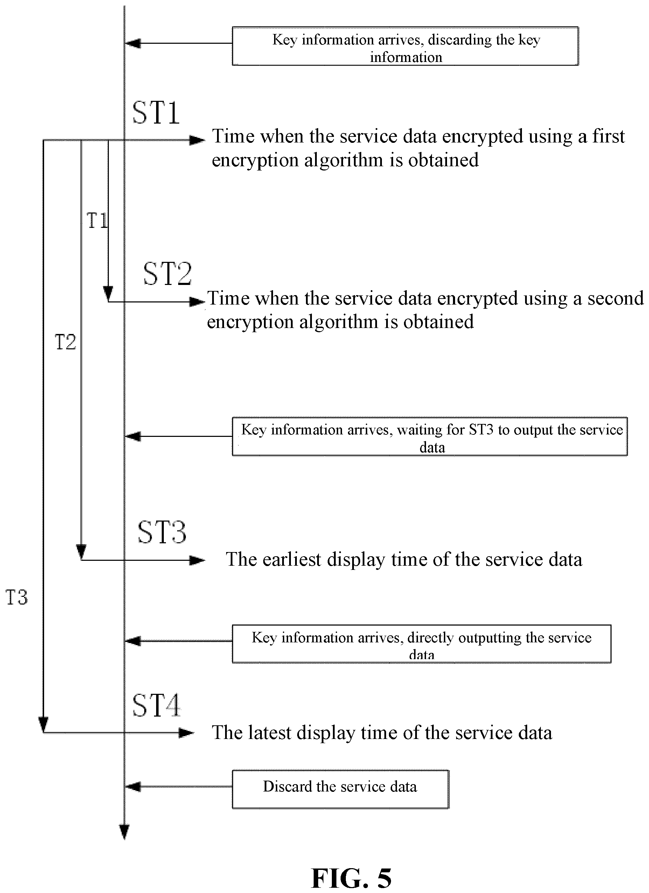

To facilitate understanding, as shown in FIG. 5, a sequence diagram of a client side outputting service data is illustrated;
at moment ST1, obtaining service data encrypted using a first encryption algorithm from a server side, the moment ST1 being the receiving time of the service data;
reaching moment ST2 after a first predetermined time T1 from the moment ST1, and at the moment ST2, obtaining the service data encrypted using a second encryption algorithm from the server side;
reaching moment ST3 after a first time interval T2 from the moment ST1, that is, the earliest display time of the service data;
reaching moment ST4 after a second time interval T3 from the moment ST1, that is, the latest display time of the service data, wherein the moment ST3 and the moment ST4 define a range of display time of the service data.

It can be seen in FIG. 5 that, if the receiving time of the key information is earlier than the moment ST1, the key information is discarded.

If the receiving time of the key information is later than the moment ST1 and earlier than the moment ST3, the moment ST3 needs to be reached to output the service data.

If the receiving time of the key information is later than the moment ST3 and earlier than the moment ST4, the service data is directly output.

If the moment ST4 is reached but the key information is not obtained, the second key is used to decrypt the service data encrypted using the second encryption algorithm, and the decrypted service data is output.

If the moment ST4 is exceeded, the service data is discarded.

Here, the first time interval and the second time interval in the predetermined latency parameter may be dynamically adjusted, so that the receiving time of the key information may be within a time range defined by the earliest display time and the latest display time of the service data, so as to ensure that the service data may be synchronously output with the predetermined content in the live-broadcasting data.

Therefore, the server side may count whether the receiving times of the key information at different client sides are within the display time range defined by the earliest display time and the latest display time of the service data; and
based on the counting result, adjust the predetermined latency parameter.

The counting result may, for example, comprise a counted number of times that the receiving times of the key information are within the display time range defined by the earliest display time and the latest display time of the service data, such that, if the counted number of times is greater than a predetermined number of times, no adjustment is needed; if the counted number of times is smaller than a predetermined number of times, the predetermined latency parameter is adjusted until the counted number of times is greater than the predetermined number of times.

Naturally, the counting result may further comprise a first number of times that the receiving times of the key information corresponding to different client sides are within the display time range defined by the earliest display time and the latest display time of the service data, a second number of times that the receiving time of the key information is earlier than the earliest display time of the service data, and a third number of times that the receiving time of the key information is later than the latest display time of the service data; and thus, the first number of times, the second number of times, and the third number of times may be combined to dynamically adjust the predetermined latency parameter, for example, if the first number of times is smaller than a predetermined number of times and the second number of times is greater than a first set value, the first time interval in the predetermined latency parameter may be decreased, and if the third number of times is greater than the first set value, the second time interval in the predetermined latency parameter may be increased.

Here, the key information inserted by the live-broadcasting side in the live-broadcasting data may be implemented in a variety of manners:
when the live-broadcasting data comprises video data, a supplemental enhancement information (SEI) frame may be generated based on the key information, the SEI frame may be inserted in the video data, such that the live-broadcasting data carries the key information, wherein the SEI frame may be inserted in the process of encoding the video data by the live-broadcasting side.

In addition, when the live-broadcasting data comprises audio data, the key information may also be converted into particular audio and inserted into the audio data. The present application does not specifically define a manner in which the key information is carried.

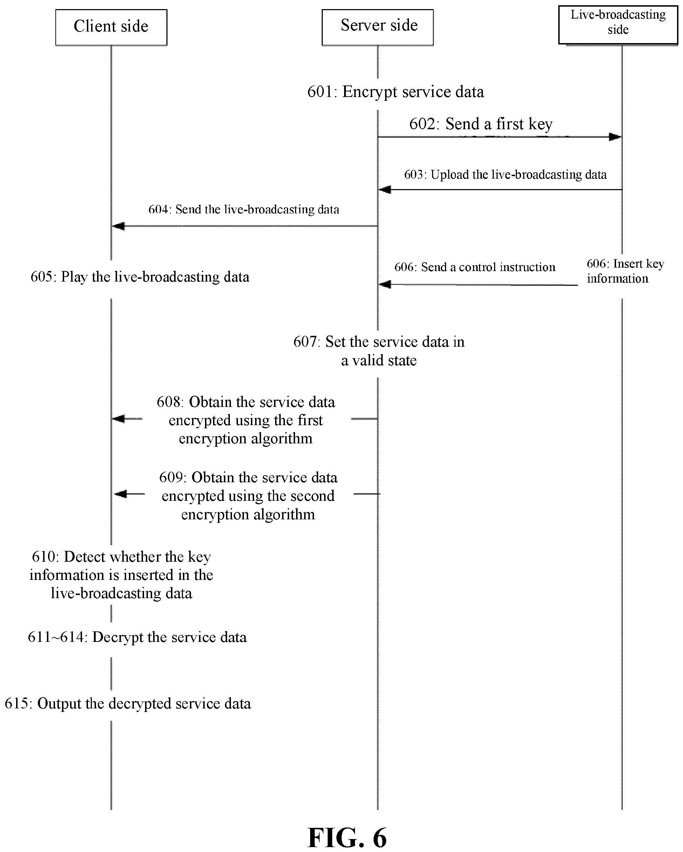

FIG. 6 is a signaling diagram of another embodiment of a live-broadcasting method according to the present application.

601: a server side uses a first encryption algorithm and a second encryption algorithm to encrypt service data, respectively.

602: the server side sends a first key corresponding to the first encryption algorithm to a live-broadcasting side.

The server side specifically uses the first encryption algorithm to encrypt the service data through the first key, and uses the second encryption algorithm to encrypt the service data through a second key.

The server side may send the second key corresponding to the second encryption algorithm to a client side when receiving a live-broadcasting request from the client side.

Here, optionally, first keys corresponding to different pieces of service data may be different from one another, while second keys corresponding to different pieces of service data may be the same, that is, the second key is a general key.

In a scenario of live-broadcasting question answering, different pieces of service data refer to different pieces of question information, and thereof the different pieces of question information may be encrypted using the first encryption algorithm through respectively unique first keys and encrypted using the second encryption algorithm through the general second key.

603: the live-broadcasting side collects live-broadcasting data and uploads the live-broadcasting data to the server side.

604: the server side sends the live-broadcasting data to the client side.

The server side may send the live-broadcasting data to the client side when receiving a live-broadcasting request from the client side.

605: the client side plays the live-broadcasting data.

606: when the live-broadcasting data comprises predetermined content, the live-broadcasting side sends a control instruction to the server side, and at the same time, inserts key information comprising the first key in the live-broadcasting data.

Optionally, the live-broadcasting side may insert the key information comprising the first key in the live-broadcasting data when receiving a push request.

The push request may be triggered when a controller detects that the live-broadcasting data comprises the predetermined content.

607: the server side determines service data corresponding to the predetermined content according to the control instruction, and set the service data in a valid state.

608: the client side periodically accesses the server side to request to obtain the service data in the valid state and encrypted using the first encryption algorithm.

609: after obtaining the service data encrypted using the first encryption algorithm, the client side obtains, after a first predetermined time, the service data in the valid state and encrypted using the first encryption algorithm.

610: the client side detects whether the key information is inserted in the live-broadcasting data.

611: in response to the key information, if the receiving time of the key information is earlier than the earliest display time of the service data, waiting until the earliest display time to decrypt the service data using the first key comprised in the key information.

612: in response to the key information, if the receiving time of the key information is later than the earliest display time of the service data and earlier than the latest display time of the service data, decrypting the service data using the first key comprised in the key information.

613: in response to the key information, if the receiving time of the key information is earlier than the obtaining time of the service data, discarding the key information.

614: if the key information is not detected and obtained when the latest display time of the service data is reached, using the second key to decrypt the service data encrypted using the second encryption algorithm.

615: outputting the decrypted service data on the playing interface of the live-broadcasting data.

Here, if the service data is not displayed at the latest display time, the service data is discarded.

With the embodiments of the present application, it can be ensured that the service data is synchronously output with the predetermined content in the live-broadcasting data, thereby improving the synchronous rate between the service data and the live-broadcasting data, improving the data security, and ensuring the impartiality of data output.

In a practical application, the technical solutions of the embodiments of the present application may be applied in a scenario of live-broadcasting question answering, the service data may comprise question information; and if detecting and obtaining the key information, the client side may output an answer widget comprising the service data.

Optionally, the service data may directly be an answer widget comprising the question information.

The predetermined content in the live-broadcasting data may comprise a question answer signal broadcast by a host at the live-broadcasting site, and the question answer signal may be broadcast after the host broadcasts the question information.

When the live-broadcasting data comprises the predetermined content, the key information may be inserted in the live-broadcasting data, and the key information may be inserted, in the form of a SEI frame, into video data of the live-broadcasting data.

In the scenario of live-broadcasting question answering, the service data may typically be output for a predetermined duration, for example, 10 seconds, and a viewing user needs to execute an answer operation through the answer widget within the predetermined duration.

With the technical solutions of the embodiments of the present application, it can be ensured that the questions are synchronously output with the answer instruction in the live-broadcasting data, and the question transmission security and answer impartiality can also be ensured.

Therefore, if the service data comprises the question information, in some embodiments, the outputting, in response to the key information, the service data on the playing interface of the live-broadcasting data comprises:
outputting, in response to the key information, an answer widget comprising the service data on the playing interface of the live-broadcasting data; and
after the outputting, if the key information is inserted in the live-broadcasting data, the service data on the playing interface of the live-broadcasting data, the method further comprises:
   in response to an input operation on the answer widget, obtaining user answer data.

Here, the user answer data may be cached to the client side.

In the scenario of live-broadcasting question answering, after the user finishes answering, the host at the live-broadcasting site may also broadcast a standard answer to the question information, and at the same time, the client side may also obtain standard answer data from the server side and display the standard answer data. In order to cause the standard answer data to be synchronously output with the content broadcast by the host in the live-broadcasting data, the method may thus further comprise:
obtaining the standard answer data of the question information from the server side;
detecting whether trigger information is inserted in the live-broadcasting data, the trigger information being inserted by the live-broadcasting side when the live-broadcasting data comprises live-broadcasting content corresponding to the standard answer data, wherein the live-broadcasting content may be obtained by collecting the standard answer broadcast by the host at the live-broadcasting site; and
outputting, in response to the trigger information, the standard answer data and the user answer data for the question information on the playing interface of the live-broadcasting data.

Naturally, a determination result regarding whether the standard answer data and the user answer data are consistent may also be output.

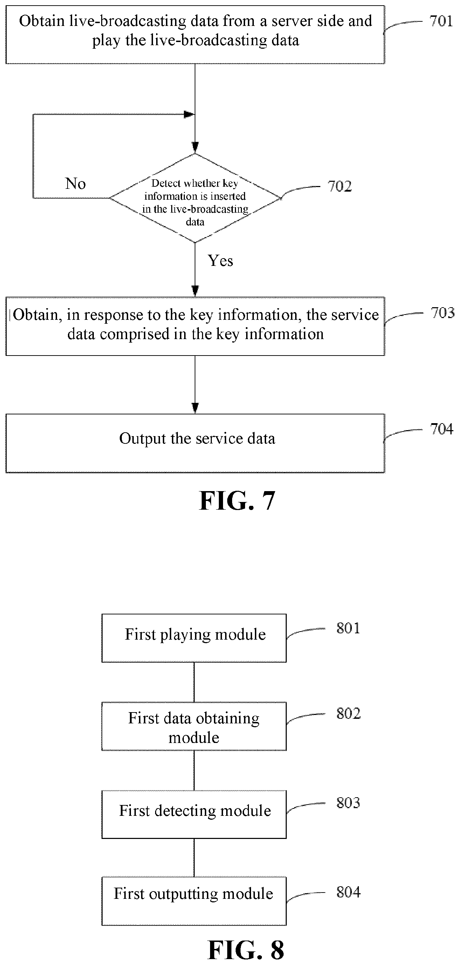

In addition, the embodiments of the present application further provide a network live-broadcasting method, and as shown in FIG. 7, the method may comprise the following steps:
701: obtain live-broadcasting data from a server side and play the live-broadcasting data.
702: detect whether key information is inserted in the live-broadcasting data, the key information being inserted by a live-broadcasting side in the live-broadcasting data when the live-broadcasting data comprises predetermined content.

The technical solution in the present embodiment is implemented by a client side.

The live-broadcasting data is collected by the live-broadcasting side and uploaded to the server side, and then transmitted by the server side to the client side. The server side may transmit the live-broadcasting data to the client side upon receiving a live-broadcasting request from the client side.

Here, the key information comprises service data corresponding to the predetermined content.

The server side may issue the service data corresponding to the predetermined content to the live-broadcasting side in advance, so that the live-broadcasting side inserts the key information comprising the service data in the live-broadcasting data when the live-broadcasting data comprises the predetermined content.

703: obtain, in response to the key information, the service data comprised in the key information.

That is, if the key information is detected and obtained, the service data comprised in the key information is obtained.

704: output the service data on a playing interface of the live-broadcasting data, so that the service data is output synchronously with the predetermined content.

If detecting and obtaining the key information, the client side may obtain the service data comprised in the key information, and thus the service data may be output. The service data and the live-broadcasting data are issued together to the client side and have the same network latency, such that the service data may be output synchronously with the predetermined content in the live-broadcasting data, thereby improving the synchronous rate between the service data and the live-broadcasting data.

Optionally, to improve security, the service side may use a first encryption algorithm to encrypt the service data and issue the service data encrypted using the first encryption algorithm to the live-broadcasting side.

The client side may obtain a first key corresponding to the first encryption algorithm from the service side; and
thus, the client side outputting the service data on the playing interface of the live-broadcasting data may comprise:
using the first key to decrypt the service data; and
outputting the decrypted service data on the playing interface of the live-broadcasting data.

To further provide security, the client side may specifically obtain the first key in a valid state from the service side. If the live-broadcasting data comprises the predetermined content, the live-broadcasting side may send a control instruction to the server side at the same time when inserting key information in the live-broadcasting data. According to the control instruction, the server side may set the first key corresponding to the service data to be in the valid state, such that the client side may obtain the first key in the valid state.

FIG. 8 is a schematic structural diagram of an embodiment of a live-broadcasting device according to the embodiments of the present application, and the device may comprise:
a first playing module 801 configured to obtain live-broadcasting data from a server side and play the live-broadcasting data;
a first data obtaining module 802 configured to obtain service data from the server side and cache the service data;
a first detecting module 803 configured to detect whether key information is inserted in the live-broadcasting data, wherein the key information is inserted by a live-broadcasting side when predetermined content corresponding to the service data is included in the live-broadcasting data; and
a first outputting module 804 configured to output, in response to the key information, the service data on a playing interface of the live-broadcasting data.

To ensure the data security, in some embodiments, the first data obtaining module is specifically configured to obtain service data encrypted using the first encryption algorithm from the server side; and
the first outputting module is specifically configured to decrypt, in response to the key information, the service data using a first key and output the decrypted service data on the playing interface of the live-broadcasting data.

Optionally, the key information comprises the first key, and the first outputting module decrypting, in response to the key information, the service data using a first key may be: in response to the key information, using the first key comprised in the key information to decrypt the service data.

Optionally, the first outputting module decrypting, in response to the key information, the service data using a first key may be: in response to the key information, obtaining the first key from the server side; and using the first key to decrypt the service data.

In some embodiments, the first data obtaining module may be specifically configured to obtain service data in a valid state from the server side; the valid state is set by the server side in response to a control instruction from the live-broadcasting side for the service data; and the control instruction is generated by the live-broadcasting side when the live-broadcasting data comprises predetermined content.

In some embodiments, the device may further comprise:
a time calculating module configured to determine, according to an obtaining time of the service data and a predetermined latency parameter, the earliest display time and the latest display time of the service data; and
the first outputting module decrypting, in response to the key information, the service data using a first key may comprise:
   if the receiving time of the key information is earlier than the earliest display time of the service data, waiting until the earliest display time to use the first key to decrypt the service data; and
   if the receiving time of the key information is later than the earliest display time of the service data and earlier than the latest display time of the service data, using the first key to decrypt the service data.

In addition, in some embodiments, the device may further comprise:
a third data obtaining module configured to obtain, after obtaining the service data encrypted using the first encryption algorithm, the service data encrypted using a second encryption algorithm from the server side after a first predetermined time; and
a first data processing module configured to, if the key information is not detected and obtained when the latest display time of the service data is reached, use a second key to decrypt the service data and output the decrypted service data on the playing interface of the live-broadcasting data.

In some embodiments, the first outputting module may be specifically configured to periodically access the server side to request to obtain the service data encrypted using the first encryption algorithm.

Optionally, the first predetermined time may be an interval time corresponding to a predetermined number of accesses.

In some embodiments, the device may further comprise:
a time calculating module configured to determine, according to an obtaining time of the service data and a predetermined latency parameter, the earliest display time and the latest display time of the service data; and
the first outputting module decrypting, if the key information is inserted in the live-broadcasting data, the service data using a first key may comprise:
   if the receiving time of the key information is earlier than the earliest display time of the service data, waiting until the earliest display time to output the service data on the playing interface of the live-broadcasting data; and
   if the receiving time of the key information is later than the earliest display time of the service data and earlier than the latest display time of the service data, outputting the service data on the playing interface of the live-broadcasting data.

In some embodiments, the device may further comprise:
a second data processing module configured to, if the key information is not detected and obtained when the latest display time of the service data is reached, request to obtain the service data that is not encrypted from the server side and output the service data on the playing interface of the live-broadcasting data.

In some embodiments, the first detecting module may be specifically configured to detect whether a SEI frame carrying the key information is inserted in the live-broadcasting data.

In some embodiments, the service data comprises question information; and
the first outputting module is specifically configured to output, in response to the key information, an answer widget comprising the question information on the playing interface of the live-broadcasting data; and
the device may further comprise:
a responding module configured to obtain, in response to an input operation on the answer widget, user answer data for the question information; and
in addition, in some embodiments, the device may further comprise:
   a fourth data obtaining module configured to detect whether trigger information is inserted in the live-broadcasting data,
   the trigger information being inserted by the live-broadcasting side when the live-broadcasting data comprises live-broadcasting content corresponding to the standard answer data; and
   a third outputting module configured to output, in response to the trigger information, the standard answer data and the user answer data on the playing interface of the live-broadcasting data.

With regard to the network live-broadcasting device in the above embodiment, specific manners to operate all modules and units therein have been described in detail in the embodiments of the methods and will not be described in detail here.

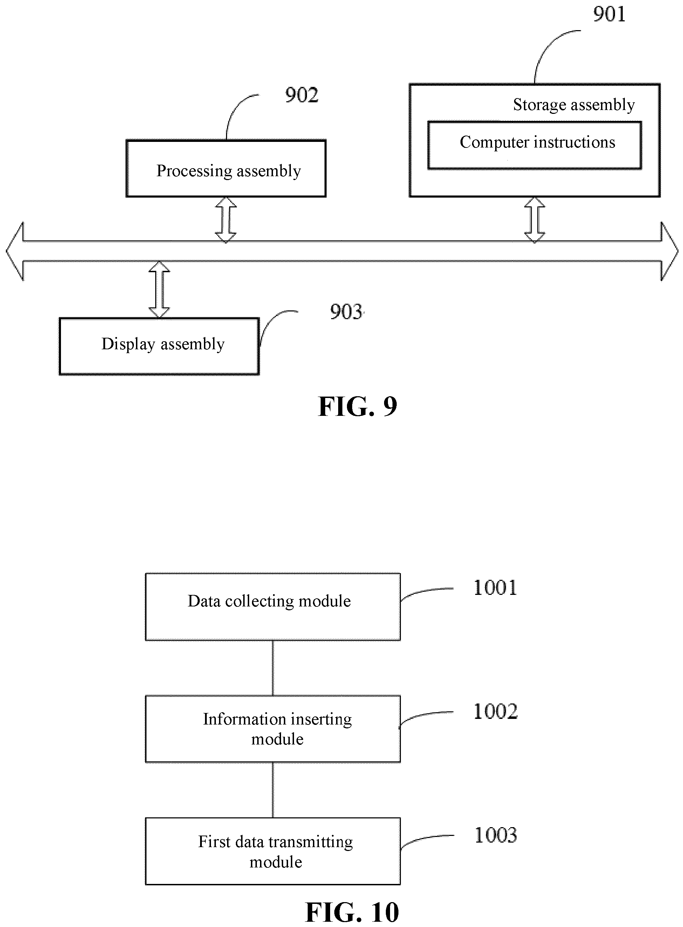

In a possible design, the network live-broadcasting device in the embodiment shown in FIG. 8 may be implemented as a terminal, and as shown in FIG. 9, the terminal may comprise a storage assembly 901, a processing assembly 902, and a display assembly 903;
the storage assembly 901 storing one or more computer program instructions; the one or more computer program instructions being called and executed by the processing assembly; and
the processing assembly 902 being configured to:
obtain live-broadcasting data from a server side and play the live-broadcasting data;
obtain service data from the server side and cache the service data;
detect whether key information is inserted in the live-broadcasting data, wherein the key information is inserted by a live-broadcasting side when predetermined content corresponding to the service data is included in the live-broadcasting data; and
in response to the key information, output the service data through a playing interface of the live-broadcasting data provided by the display assembly 903, so that the service data is output synchronously with the predetermined content.

Here, the processing assembly 902 may comprise one or more processors to execute computer instructions, so as to complete all or some steps in the above methods. Naturally, the processing assembly may also be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, and is configured to execute the above methods.

The storage assembly 901 is configured to store various types of data to support operations on the terminal. The storage assembly may be implemented by any type of volatile or non-volatile storage devices or combinations thereof, such as a static random access memory (SRAM), an electrically erasable programmable read-only memory (EEPROM), an erasable programmable read-only memory (EPROM), a programmable read only memory (PROM), a read only memory (ROM), a magnetic memory, a flash memory, a magnetic disk, or an optical disc.

The display assembly 903 may be an electroluminescent (EL) element, a liquid crystal display or a micro display with a similar structure, or a laser scanning display that may directly display on a retina or the like.

The embodiments of the present application further provide a computer readable storage medium with computer programs stored, and the computer programs may, when executed by a computer, implement the network live-broadcasting method of the embodiment shown in FIG. 1.

FIG. 10 is a schematic structural diagram of another embodiment of a live-broadcasting device according to the embodiments of the present application, and the device may comprise:
a data collecting module 1001 configured to collect live-broadcasting data;
an information inserting module 1002 configured to insert, if predetermined content corresponding to service data is included in the live-broadcasting data, key information corresponding to the service data in the live-broadcasting data; and
a first data transmitting module 1003 configured to transmit the live-broadcasting data to a server side, wherein the live-broadcasting data is transmitted to a client side for the client side to play the live-broadcasting data, and when the key information is detected and obtained from the live-broadcasting data, output the service data obtained from the server side on a playing interface of the live-broadcasting data.

In some embodiments, the device may further comprise:
an instruction sending module configured to send, if the live-broadcasting data comprises predetermined content corresponding to the service data, a control instruction to the server side, wherein the control instruction is used to trigger the service side to determine the service data corresponding to the predetermined content, and set the service data to be in a valid state for the client side to obtain.

In some embodiments, the information inserting module is specifically configured to determine, if a push request is received, that the predetermined content corresponding to the service data is included in the live-broadcasting data, and insert the key information corresponding to the service data in the live-broadcasting data.

In some embodiments, the live-broadcasting data comprises video data; and
the information inserting module is specifically configured to insert, if the predetermined content corresponding to the service data is included in the live-broadcasting data, a SEI frame carrying the key information in the video data.

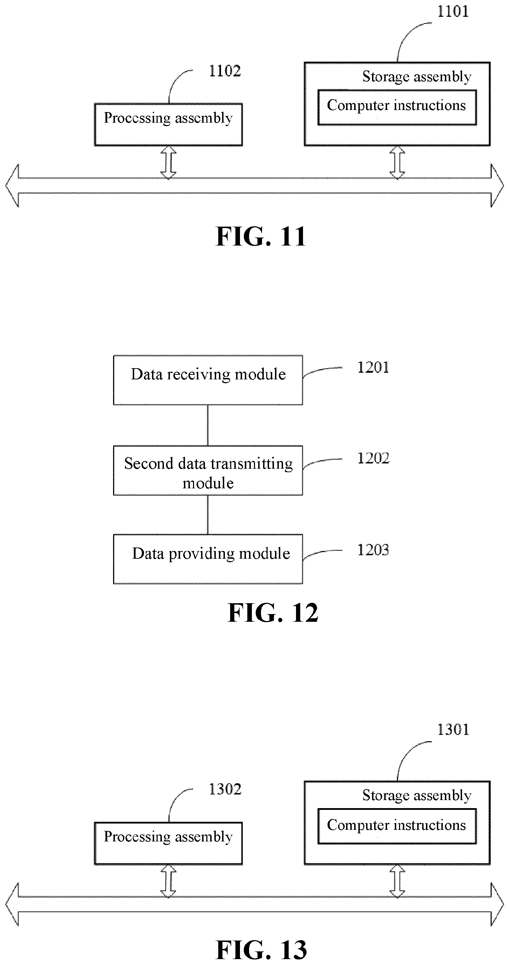

In a possible design, the network live-broadcasting device in the embodiment shown in FIG. 10 may be implemented as a terminal, and as shown in FIG. 11, the terminal may comprise a storage assembly 1101 and a processing assembly 1102;
the storage assembly 1101 storing one or more computer program instructions; the one or more computer program instructions being called and executed by the processing assembly; and
the processing assembly 1102 being configured to:
collect live-broadcasting data;
insert, if predetermined content corresponding to service data is included in the live-broadcasting data, key information corresponding to the service data in the live-broadcasting data; and
transmit the live-broadcasting data to a server side, wherein the live-broadcasting data is transmitted to a client side for the client side to play the live-broadcasting data, and when the key information is detected and obtained from the live-broadcasting data, output the service data obtained from the server side.

Here, the processing assembly 1102 may comprise one or more processors to execute computer instructions, so as to complete all or some steps in the above methods. Naturally, the processing assembly may also be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, and is configured to execute the above methods.

The storage assembly 1101 is configured to store various types of data to support operations on the terminal. The storage assembly may be implemented by any type of volatile or non-volatile storage devices or combinations thereof, such as a static random access memory (SRAM), an electrically erasable programmable read-only memory (EEPROM), an erasable programmable read-only memory (EPROM), a programmable read only memory (PROM), a read only memory (ROM), a magnetic memory, a flash memory, a magnetic disk, or an optical disc.

The embodiments of the present application further provide a computer readable storage medium with computer programs stored, and the computer programs may, when executed by a computer, implement the network live-broadcasting method of the embodiment shown in FIG. 2.

FIG. 12 is a schematic structural diagram of another embodiment of a live-broadcasting device according to the embodiments of the present application, and the device may comprise:
a data receiving module 1201 configured to receive live-broadcasting data uploaded by a live-broadcasting side, wherein key information is inserted when the live-broadcasting data comprises predetermined content corresponding to service data;
a second data transmitting module 1202 configured to transmit the live-broadcasting data to a client side for the client side to play the live-broadcasting data; and
a data providing module 1203 configured to provide the service data to the client side for the client side to output the service data on a playing interface of the live-broadcasting data when the key information is detected and obtained from the live-broadcasting data.

In some embodiments, the device may further comprise:
a first encrypting module configured to use a first encryption algorithm to encrypt the service data; and send a first key corresponding to the first encryption algorithm to a live-broadcasting side for the live-broadcasting side to insert key information comprising the first key when the live-broadcasting data comprises predetermined content corresponding to the service data; and
the data providing module may be specifically configured to receive an obtaining request sent from the client side; and send the service data encrypted using the first encryption algorithm to the client server for the client server to, when detecting and obtaining the key information from the live-broadcasting data, decrypt the service data using the first key in the key information and output the decrypted service data on the playing interface of the live-broadcasting data.

In some embodiments, the device may further comprise:
an instruction receiving module configured to receive a control instruction sent by the live-broadcasting side, wherein the control instruction is sent by the live-broadcasting side when the live-broadcasting data comprises predetermined content corresponding to the service data; and
set the service data indicated by the control instruction to be in a valid state; and
the data providing module may be specifically configured to receive an obtaining request sent from the client side; and send the service data in the valid state to the client server.

In some embodiments, the device may further comprise:
a second encrypting module configured to use a second encryption algorithm to encrypt the service data; and send a second key corresponding to the second encryption algorithm to the client side; and
a sending module configured to send, after a predetermined time, the service data encrypted using the second encryption algorithm to the client side for the client side to, if the key information is not detected and obtained when the latest display time of the service data is reached, use the second key to decrypt the service data encrypted using the second encryption algorithm and output the decrypted service data on the playing interface of the live-broadcasting data.

In some embodiments, the device may further comprise:
a parameter setting module configured to set a predetermined latency parameter of the service data; and
a parameter providing module configured to provide the predetermined latency parameter to the client side for the client side to determine, according to the obtaining time of the service data and the predetermined latency parameter, the earliest display time and the latest display time of the service data; if the receiving time of the key information is earlier than the earliest display time of the service data, wait until the earliest display time to output the service data on the playing interface of the live-broadcasting data; and if the receiving time of the key information is later than the earliest display time of the service data and earlier than the latest display time of the service data, output the service data on the playing interface of the live-broadcasting data.

In some embodiments, the device may further comprise:
a counting module configured to count whether the receiving times of the key information at different client sides are within a display time range defined by the earliest display time and the latest display time of the service data; and
a parameter updating module configured to adjust, based on the counting result, the predetermined latency parameter.

In a possible design, the network live-broadcasting device in the embodiment shown in FIG. 12 may be implemented as a terminal, and as shown in FIG. 13, the terminal may comprise a storage assembly 1301 and a processing assembly 1302;
the storage assembly 1301 storing one or more computer program instructions; the one or more computer program instructions being called and executed by the processing assembly; and
the processing assembly 1302 being configured to:
receive live-broadcasting data uploaded by a live-broadcasting side, wherein key information is inserted when the live-broadcasting data comprises predetermined content corresponding to service data;
transmit the live-broadcasting data to a client side for the client side to play the live-broadcasting data; and
provide the service data to the client side for the client side to output the service data on a playing interface of the live-broadcasting data when the key information is detected and obtained from the live-broadcasting data.

Here, the processing assembly 1302 may comprise one or more processors to execute computer instructions, so as to complete all or some steps in the above methods. Naturally, the processing assembly may also be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, and is configured to execute the above methods.

The storage assembly 1301 is configured to store various types of data to support operations on the terminal. The storage assembly may be implemented by any type of volatile or non-volatile storage devices or combinations thereof, such as a static random access memory (SRAM), an electrically erasable programmable read-only memory (EEPROM), an erasable programmable read-only memory (EPROM), a programmable read only memory (PROM), a read only memory (ROM), a magnetic memory, a flash memory, a magnetic disk, or an optical disc.

The embodiments of the present application further provide a computer readable storage medium with computer programs stored, and the computer programs may, when executed by a computer, implement the network live-broadcasting method of the embodiment shown in FIG. 3.

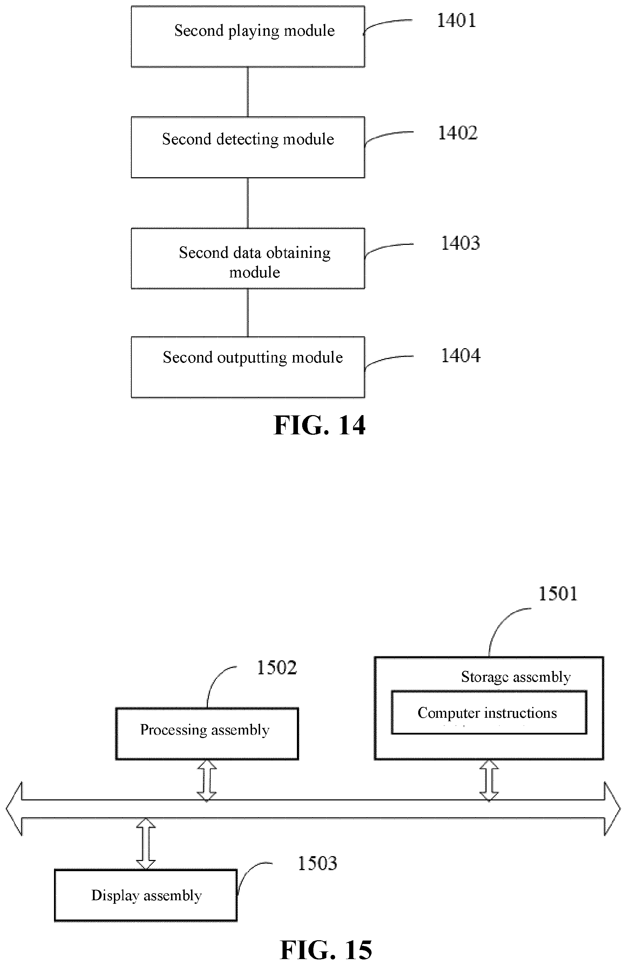

FIG. 14 is a schematic structural diagram of another embodiment of a live-broadcasting device according to the present application, and the device may comprise:
a second playing module 1401 configured to obtain live-broadcasting data from a server side and play the live-broadcasting data;
a second detecting module 1402 configured to detect whether key information is inserted in the live-broadcasting data, the key information being inserted by a live-broadcasting side in the live-broadcasting data when the live-broadcasting data comprises predetermined content corresponding to service data;
a second data obtaining module 1403 configured to obtain, in response to the key information, the service data comprised in the key information; and
a second outputting module 1404 configured to output the service data on a playing interface of the live-broadcasting data, so that the service data is output synchronously with the predetermined content.

In some embodiments, the service data is encrypted using a first encryption algorithm; and
the device may further comprise:
a key obtaining module configured to obtain a first key in a valid state from the server side; the valid state is set by the server side in response to a control instruction from the live-broadcasting side for the first key; and the control instruction is generated by the live-broadcasting side when the live-broadcasting data comprises predetermined content corresponding to the service data; and
the second outputting module is specifically configured to decrypt the service data using the first key, and output the decrypted service data on the playing interface of the live-broadcasting data.

In a possible design, the network live-broadcasting device in the embodiment shown in FIG. 14 may be implemented as a terminal, and as shown in FIG. 15, the terminal may comprise a storage assembly 1501, a processing assembly 1502, and a display assembly 1503;
the storage assembly 1501 storing one or more computer program instructions; the one or more computer program instructions being called and executed by the processing assembly;
the processing assembly 1502 being configured to:
obtain live-broadcasting data from a server side and play the live-broadcasting data;
detect whether key information is inserted in the live-broadcasting data, the key information being inserted by a live-broadcasting side when the live-broadcasting data comprises predetermined content corresponding to service data;
obtain, in response to the key information, the service data comprised in the key information; and
output the service data through a playing interface for outputting the live-broadcasting data provided by the display assembly 1503, so that the service data is output synchronously with the predetermined content.

Here, the processing assembly 1502 may comprise one or more processors to execute computer instructions, so as to complete all or some steps in the above methods. Naturally, the processing assembly may also be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, and is configured to execute the above methods.

The storage assembly 1501 is configured to store various types of data to support operations on the terminal. The storage assembly may be implemented by any type of volatile or non-volatile storage devices or combinations thereof, such as a static random access memory (SRAM), an electrically erasable programmable read-only memory (EEPROM), an erasable programmable read-only memory (EPROM), a programmable read only memory (PROM), a read only memory (ROM), a magnetic memory, a flash memory, a magnetic disk, or an optical disc.

The display assembly 1503 may be an electroluminescent (EL) element, a liquid crystal display or a micro display with a similar structure, or a laser scanning display that may directly display on a retina or the like.

The embodiments of the present application further provide a computer readable storage medium with computer programs stored, and the computer programs may, when executed by a computer, implement the network live-broadcasting method of the embodiment shown in FIG. 7.

Those skilled in the art may clearly learn that, for convenience and conciseness of the description, corresponding processes in the above-described method embodiments may be referenced for specific working processes of the above-described systems, devices, and units, which will not be elaborated herein.

The above-described device embodiments are merely illustrative, wherein the units described as separate parts may or may not be physically separated, the parts illustrated as units may or may not be physical units, that is, they may be located at one place or may be distributed over a plurality of network units. Some or all the modules thereof may be selected according to actual needs to achieve the objectives of the embodiments, which may be understood and implemented by those of ordinary skill in the art without creative effort.

Through the above description of implementation manners, those skilled in the art may clearly learn that all the implementation manners may be realized by software plus necessary general hardware platform or naturally by hardware. Based on such understanding, the above-described technical solutions are essentially or parts thereof that make contributions to the prior art may be embodied in the form of a software product. The computer software product may be stored in a computer readable storage medium, such as ROM/RAM, a magnetic disk, an optical disc, and the like, including several instructions to cause a computer device (which may be a personal computer, a server, or a network device) to execute the methods of each embodiment or some parts of the embodiments.

It should be noted lastly that the above-described embodiments are only used to describe, rather than limit, the technical solutions of the present application. Although the present application is described in detail with reference to the above-described embodiments, those of ordinary skill in the art should understand that they may still amend the technical solutions according to the above-described embodiments or make equivalent substitutions for some technical features thereof, while these amendments or substitutions do not cause the essence of corresponding technical solutions to depart from the spirit and scope of the technical solutions of the embodiments of the present application.

## Claims

1. A network live-broadcasting method, comprising:
obtaining live-broadcasting data from a server side and playing the live-broadcasting data;
obtaining service data from the server side and caching the service data;
detecting whether key information is inserted in the live-broadcasting data, wherein the key information is inserted by a live-broadcasting side in the live-broadcasting data when predetermined content corresponding to the service data is included in the live-broadcasting data; and
outputting, in response to the key information, the service data on a playing interface of the live-broadcasting data, so that the service data is output synchronously with the predetermined content.

2. The method according to claim 1, wherein the obtaining service data from the server side and caching the service data comprises:
obtaining service data encrypted using a first encryption algorithm from the server side and caching the service data; and
the outputting, in response to the key information, the service data on a playing interface of the live-broadcasting data comprises:
decrypting, in response to the key information, the service data using a first key; and
outputting the decrypted service data on a playing interface of the live-broadcasting data.

3. The method according to claim 1, further comprising:
determining, according to an obtaining time of the service data and a predetermined latency parameter, the earliest display time and the latest display time of the service data; and
the outputting, in response to the key information, the service data on a playing interface of the live-broadcasting data comprises:
if the receiving time of the key information is earlier than the earliest display time of the service data, waiting until the earliest display time to output the service data on the playing interface of the live-broadcasting data; and
if the receiving time of the key information is later than the earliest display time of the service data and earlier than the latest display time of the service data, outputting the service data on the playing interface of the live-broadcasting data.

4. The method according to claim 3, further comprising:
if the key information is not detected and obtained when the latest display time of the service data is reached, requesting to obtain the service data that is not encrypted from the server side and outputting the service data on the playing interface of the live-broadcasting data.

5. The method according to claim 2, wherein the key information comprises the first key; and
the decrypting, in response to the key information, the service data using the first key comprises:
decrypting, in response to the key information, the service data using the first key comprised in the key information.

6. The method according to claim 2, wherein the decrypting, in response to the key information, the service data using the first key comprises:
in response to the key information, obtaining the first key from the server side; and
decrypting the service data using the first key.

7. The method according to claim 2, further comprising:
determining, according to an obtaining time of the service data and a predetermined latency parameter, the earliest display time and the latest display time of the service data; and
the decrypting, in response to the key information, the service data using the first key comprises:
if the receiving time of the key information is earlier than the earliest display time of the service data, waiting until the earliest display time to use the first key to decrypt the service data; and
if the receiving time of the key information is later than the earliest display time of the service data and earlier than the latest display time of the service data, using the first key to decrypt the service data.

8. The method according to claim 7, further comprising:
after obtaining the service data encrypted using the first encryption algorithm, obtaining the service data encrypted using a second encryption algorithm from the server side after a first predetermined time; and
if the key information is not detected and obtained when the latest display time of the service data is reached, using a second key to decrypt the service data and outputting the decrypted service data on the playing interface of the live-broadcasting data.

9. The method according to claim 8, wherein the first predetermined time is an interval time corresponding to a predetermined number of accesses.

10. The method according to claim 7, wherein the obtaining service data encrypted using a first encryption algorithm from the server side and caching the service data comprises:
periodically accessing the server side to request to obtain the service data encrypted using the first encryption algorithm and caching the service data.

11. The method according to claim 1, wherein the obtaining service data from the server side and caching the service data comprises:
obtaining service data in a valid state from the server side and caching the service data; the valid state being set by the server side in response to a control instruction from the live-broadcasting side for the service data; and the control instruction being generated by the live-broadcasting side when the live-broadcasting data comprises predetermined content.

12. The method according to claim 1, wherein the detecting whether key information is inserted in the live-broadcasting data comprises:
detecting whether a supplemental enhancement information (SEI) frame carrying the key information is inserted in the live-broadcasting data.

13. The method according to claim 1, wherein the service data is text data or image data; and
the outputting, in response to the key information, the service data on a playing interface of the live-broadcasting data comprises:
displaying, in response to the key information, the service data or the image data on a playing interface of the live-broadcasting data.

14. The method according to claim 1, wherein the service data comprises question information; and
the outputting, in response to the key information, the service data on a playing interface of the live-broadcasting data comprises:
displaying, in response to the key information, an answer widget comprising the service data on the playing interface of the live-broadcasting data; and
after the displaying, in response to the key information, an answer widget comprising the service data on the playing interface of the live-broadcasting data, the method further comprises:
obtaining, in response to an input operation on the answer widget, user answer data for the question information.

15. The method according to claim 14, further comprising:
obtaining standard answer data of the question information from the server side;
detecting whether trigger information is inserted in the live-broadcasting data, the trigger information being inserted by the live-broadcasting side when the live-broadcasting data comprises live-broadcasting content corresponding to the standard answer data; and
outputting, in response to the trigger information, the standard answer data and the user answer data on the playing interface of the live-broadcasting data.

16. A network live-broadcasting method, comprising:
collecting live-broadcasting data;
inserting, if predetermined content corresponding to service data is included in the live-broadcasting data, key information corresponding to the service data in the live-broadcasting data; and
transmitting the live-broadcasting data to a server side, wherein the live-broadcasting data is transmitted to a client side for the client side to play the live-broadcasting data, and when the key information is detected and obtained from the live-broadcasting data, outputting the service data obtained from the server side on a playing interface of the live-broadcasting data.

17. The method according to claim 16, further comprising:
sending, if the live-broadcasting data comprises predetermined content corresponding to the service data, a control instruction to the server side, wherein the control instruction is used to trigger the service side to determine the service data corresponding to the predetermined content, and set the service data to be in a valid state for the client side to obtain.

18. The method according to claim 16, wherein the inserting, if predetermined content corresponding to service data is included in the live-broadcasting data, key information corresponding to the service data in the live-broadcasting data comprises:
determining, if a push request is received, that the predetermined content corresponding to the service data is included in the live-broadcasting data, and inserting the key information corresponding to the service data in the live-broadcasting data.

19. The method according to claim 16, wherein the live-broadcasting data comprises video data; and
the inserting, if predetermined content corresponding to service data is included in the live-broadcasting data, key information corresponding to the service data in the live-broadcasting data comprises:
inserting, if the predetermined content corresponding to the service data is included in the live-broadcasting data, a SEI frame carrying the key information in the video data.

20. A network live-broadcasting method, comprising:
receiving live-broadcasting data uploaded by a live-broadcasting side, wherein key information is inserted when the live-broadcasting data comprises predetermined content corresponding to service data;
transmitting the live-broadcasting data to a client side for the client side to play the live-broadcasting data; and
providing the service data to the client side for the client side to output the service data on a playing interface of the live-broadcasting data when the key information is detected and obtained from the live-broadcasting data.

21. The method according to claim 20, further comprising:
using a first encryption algorithm to encrypt the service data; and
sending a first key corresponding to the first encryption algorithm to a live-broadcasting side for the live-broadcasting side to insert key information comprising the first key when the live-broadcasting data comprises predetermined content corresponding to the service data; and
the providing the service data to the client side comprises:
receiving an obtaining request sent from the client side; and
sending the service data encrypted using the first encryption algorithm to the client server for the client server to, when detecting and obtaining the key information from the live-broadcasting data, decrypt the service data using the first key in the key information and output the decrypted service data on the playing interface of the live-broadcasting data.

22. The method according to claim 20, further comprising:
receiving a control instruction sent by the live-broadcasting side, wherein the control instruction is sent by the live-broadcasting side when the live-broadcasting data comprises predetermined content corresponding to the service data; and
setting the service data indicated by the control instruction to be in a valid state; and
the providing the service data to the client side comprises:
receiving an obtaining request sent from the client side; and
sending the service data in the valid state to the client server.

23. The method according to claim 21, further comprising:
using a second encryption algorithm to encrypt the service data; and
sending a second key corresponding to the second encryption algorithm to the client side; and
after the sending the service data encrypted using the first encryption algorithm to the client server, the method further comprises:
sending, after a predetermined time, the service data encrypted using the second encryption algorithm to the client side for the client side to, if the key information is not detected and obtained when the latest display time of the service data is reached, use the second key to decrypt the service data encrypted using the second encryption algorithm and output the decrypted service data on the playing interface of the live-broadcasting data.

24. The method according to claim 20, further comprising:
setting a predetermined latency parameter of the service data; and
providing the predetermined latency parameter to the client side for the client side to determine, according to the obtaining time of the service data and the predetermined latency parameter, the earliest display time and the latest display time of the service data; if the receiving time of the key information is earlier than the earliest display time of the service data, waiting until the earliest display time to output the service data on the playing interface of the live-broadcasting data; and if the receiving time of the key information is later than the earliest display time of the service data and earlier than the latest display time of the service data, outputting the service data on the playing interface of the live-broadcasting data.

25. The method according to claim 24, further comprising:
counting whether the receiving times of the key information at different client sides are within a display time range defined by the earliest display time and the latest display time of the service data; and
adjusting, based on the counting result, the predetermined latency parameter.

26. A network live-broadcasting method, comprising:
obtaining live-broadcasting data from a server side and playing the live-broadcasting data;
detecting whether key information is inserted in the live-broadcasting data, the key information being inserted by a live-broadcasting side in the live-broadcasting data when the live-broadcasting data comprises predetermined content corresponding to service data;
obtaining, in response to the key information, the service data comprised in the key information; and
outputting the service data on a playing interface of the live-broadcasting data, so that the service data is output synchronously with the predetermined content.

27. The method according to claim 26, wherein the service data is encrypted using a first encryption algorithm;
the method further comprises:
obtaining a first key in a valid state from the server side; the valid state being set by the server side in response to a control instruction from the live-broadcasting side for the first key; and the control instruction being generated by the live-broadcasting side when the live-broadcasting data comprises predetermined content corresponding to the service data; and
the outputting the service data on a playing interface of the live-broadcasting data comprises:
decrypting the service data using the first key; and
outputting the decrypted service data on the playing interface of the live-broadcasting data.

28. A network live-broadcasting device, comprising:
a first playing module configured to obtain live-broadcasting data from a server side and play the live-broadcasting data;
a first data obtaining module configured to obtain service data from the server side and cache the service data;
a first detecting module configured to detect whether key information is inserted in the live-broadcasting data, wherein the key information is inserted by a live-broadcasting side into the service data when predetermined content corresponding to the service data is included in the live-broadcasting data; and
a first outputting module configured to output, in response to the key information, the service data on a playing interface of the live-broadcasting data.

29. A network live-broadcasting device, comprising:
a data collecting module configured to collect live-broadcasting data;
an information inserting module configured to insert, if predetermined content corresponding to service data is included in the live-broadcasting data, key information corresponding to the service data in the live-broadcasting data; and
a first data transmitting module configured to transmit the live-broadcasting data to a server side, wherein the live-broadcasting data is transmitted to a client side for the client side to play the live-broadcasting data, and when the key information is detected and obtained from the live-broadcasting data, output the service data obtained from the server side on a playing interface of the live-broadcasting data.

30. A network live-broadcasting device, comprising:
a data receiving module configured to receive live-broadcasting data uploaded by a live-broadcasting side, wherein key information is inserted when the live-broadcasting data comprises predetermined content corresponding to service data;
a second data transmitting module configured to transmit the live-broadcasting data to a client side for the client side to play the live-broadcasting data; and
a data providing module configured to provide the service data to the client side for the client side to output the service data on a playing interface of the live-broadcasting data when the key information is detected and obtained from the live-broadcasting data.

31. A network live-broadcasting device, comprising:
a second playing module configured to obtain live-broadcasting data from a server side and play the live-broadcasting data;
a second detecting module configured to detect whether key information is inserted in the live-broadcasting data, the key information being inserted by a live-broadcasting side in the live-broadcasting data when the live-broadcasting data comprises predetermined content corresponding to service data;
a second data obtaining module configured to obtain, in response to the key information, the service data comprised in the key information; and
a second outputting module configured to output the service data on a playing interface of the live-broadcasting data, so that the service data is output synchronously with the predetermined content.

32. A terminal, comprising a storage assembly, a processing assembly, and a display assembly;
the storage assembly storing one or more computer program instructions; the one or more computer program instructions being called and executed by the processing assembly; and
the processing assembly being configured to:
obtain live-broadcasting data from a server side and play the live-broadcasting data;
obtain service data from the server side and cache the service data;
detect whether key information is inserted in the live-broadcasting data, wherein the key information is inserted by a live-broadcasting side into the service data when predetermined content corresponding to the service data is included in the live-broadcasting data; and
in response to the key information, output the service data on a playing interface of the live-broadcasting data provided by the display assembly, so that the service data is output synchronously with the predetermined content.

33. A terminal, comprising a storage assembly and a processing assembly;
the storage assembly storing one or more computer program instructions; the one or more computer program instructions being called and executed by the processing assembly; and
the processing assembly being configured to:
collect live-broadcasting data;
insert, if predetermined content corresponding to service data is included in the live-broadcasting data, key information corresponding to the service data in the live-broadcasting data; and
transmit the live-broadcasting data to a server side, wherein the live-broadcasting data is transmitted to a client side for the client side to play the live-broadcasting data, and when the key information is detected and obtained from the live-broadcasting data, output the service data obtained from the server side on a playing interface of the live-broadcasting data.

34. A server, comprising a storage assembly and a processing assembly;
the storage assembly storing one or more computer program instructions; the one or more computer program instructions being called and executed by the processing assembly; and
the processing assembly being configured to:
receive live-broadcasting data uploaded by a live-broadcasting side, wherein key information is inserted when the live-broadcasting data comprises predetermined content corresponding to service data;
transmit the live-broadcasting data to a client side for the client side to play the live-broadcasting data; and
provide the service data to the client side for the client side to output the service data on a playing interface of the live-broadcasting data when the key information is detected and obtained from the live-broadcasting data.

35. A terminal, comprising a storage assembly, a processing assembly, and a display assembly;
the storage assembly storing one or more computer program instructions; the one or more computer program instructions being called and executed by the processing assembly; and
the processing assembly being configured to:
obtain live-broadcasting data from a server side and play the live-broadcasting data;
detect whether key information is inserted in the live-broadcasting data, the key information being inserted by a live-broadcasting side in the live-broadcasting data when the live-broadcasting data comprises predetermined content corresponding to service data;
obtain, in response to the key information, the service data comprised in the key information; and
output the service data on a playing interface of the live-broadcasting data provided by the display assembly, so that the service data is output synchronously with the predetermined content.
